# EUROPÄISCHE PATENTSCHRIFT

(11) **EP 1 184 113 B1**
(45) Veröffentlichungstag und Bekanntmachung des Hinweises auf die Patenterteilung: **17.08.2005**
(21) Anmeldenummer: 01112512.7
(22) Anmeldetag: 23.05.2001
(51) Int. Cl.: B23B 31/26

(54) **Spannvorrichtung für einen Hohlschaft**
Clamp apparatus for a hollow shank
Dispositif de serrage pour un arbre creux

(30) Priorität: 17.08.2000 DE 10040638
(43) Veröffentlichungstag der Anmeldung: 06.03.2002
(73) Patentinhaber: Röhm GmbH, 89567 Sontheim (DE)
(72) Erfinder: Hangleiter, Eugen, 89568 Hermaringen (DE)
(74) Vertreter: Hentrich, Swen Dipl.-Phys. Dr.

(56) Entgegenhaltungen:
- EP-A- 0 909 601
- DE-U- 8 703 268
- US-A- 5 509 763
- US-A- 5 730 562

## Beschreibung

Die Erfindung betrifft eine Spannvorrichtung zur lösbaren Kupplung eines einen Hohlschaft mit einer Hohlschaftaufnahme aufweisenden Werkzeugs, Werkstücks oder dergl. mit der Arbeitsspindel einer Werkzeugmaschine, wobei der Hohlschaft in der Hohlschaftaufnahme geneigt verlaufende Spannschrägen aufweist, an denen zur Erzeugung einer Anpreßkraft zwischen dem Hohlschaft und der Arbeitsspindel durch einen axial verschieblichen, in der Arbeitsspindel geführten Spannkopf betätigbare, an der Arbeitsspindel gelagerte Spannklauen mit korrespondierend geneigten Schrägflächen zur Anlage bringbar sind.

Eine derartige Spannvorrichtung ist aus der DE 41 38 974 A1 bekannt, bei der die Spannklauen durch eine über eine Zugstange vermittelte axiale Verstellung des Spannkopfes aus einer Position, in der sie außer Eingriff mit dem Hohlschaft sind, in eine Position verstellt werden, in der die Spannklauen in Eingriff mit dem Hohlschaft sind, der üblicherweise mittels einer Ladeeinrichtung der Spannvorrichtung zugeführt wird. Die langerstreckten, nur einseitig an der Arbeitsspindel gelagerten Spannklauen weisen ein Spiel auf, das dem freien Ende nicht exakt radial erfolgende Bewegungen mit seitlichen Bewegungskomponenten ermöglicht, so daß eine exakt gleichmäßige Verteilung der Spannklauen an ihrem freien Ende in Umfangsrichtung nicht gegeben ist. Dies führt zu einer Unwucht, die bei konventionellen Werkzeugmaschinen unproblematisch ist, sich aber bei modernen, mit Drehzahlen bis zu 40.000 Umdrehungen pro Minute arbeitenden Werkzeugmaschinen nachteilig auswirkt.

Der Erfindung liegt daher die Aufgabe zugrunde, eine Spannvorrichtung der eingangs genannten Art so auszubilden, daß eine sich beim Spannvorgang ergebende Unwucht vermieden wird.

Diese Aufgabe wird nach der Erfindung bei einer Spannvorrichtung der eingangs genannten Art dadurch gelöst, daß an dem Spannkopf zur Führung der Spannklauen radial abstehende Flügel ausgebildet sind.

Die Erfindung bietet den Vorteil, daß erstmals eine seitliche Führung der Spannklauen bereitgestellt wird mit einer großen Führungslänge, die sich bis nahe des freien Endes der Spannklauen erstreckt und so seitliche Ausweichbewegungen der Spannklauen mit Sicherheit verhindert. Die Zuordnung dieser als Führungsflächen fungierenden Flügel zum Spannkopf und nicht zur Arbeitsspindel, an der die Spannklauen bereits einseitig gelagert sind, ermöglicht eine einfache Fertigung und beschränkt nicht die Länge des in die Arbeitsspindel einsetzbaren Hohlschaftes.

Als vorteilhaft hat sich weiterhin herausgestellt, wenn jede Spannklaue an dem Ende, das von dem die Schrägfläche aufweisenden Klauenkopf abgewandt ist, einen in eine in Umfangsrichtung der Arbeitsspindel verlaufende Ringnut eingreifenden Klauenfuß aufweist, wenn an dem Spannkopf zur Ausbildung eines Keilgetriebes eine mit dem Klauenkopf jeder Spannklaue zusammenwirkende Kegelfläche und zum Lösen der Spannung eine dem Klauenfuß zugeordnete Stellfläche ausgebildet ist, und wenn die Flügel zwischen der Kegelfläche und der Stellfläche angeordnet sind. Diese Wahl hinsichtlich der Anordnung der Flügel stellt sicher, daß die zur Betätigung der Spannklauen beim Spannen und Lösen erforderlichen Funktionsflächen aufgrund der gegenüber den Flügeln erfolgenden axialen Staffelung nicht modifiziert werden müssen.

Als günstig hat sich erwiesen, wenn sich die Längenerstreckung der Flügel in axialer Richtung des Spannkopfes radial von innen nach außen vergrößert. Diese Gestaltung kombiniert die Vorteile einer möglichst großen Führungslänge der Flügel mit den Vorteilen einer einfachen Fertigung, da der Spannkopf über den größten Teil seiner Längenerstreckung konventionell drehend gefertigt werden kann und nur im Bereich zwischen den Flügeln eine Bearbeitung durch Fräsen vorgenommen werden muß.

Eine bevorzugte Ausführungsform der Erfindung ist dadurch gekennzeichnet, daß die Spannklauen an ihren Klauenfüßen durch ein Federglied zu einer Segmentspannzange verbunden sind. Die Verbindung der Spannklauen zu einer Segmentspannzange vereinfacht die Handhabung bei der Montage und bei der Betätigung der Spannvorrichtung, da für die Montage die Spannklauen der Segmentspannzange lediglich unter Spannung des Federgliedes zusammengedrückt werden müssen und dann in die in Umfangsrichtung der Arbeitsspindel verlaufende Ringnut eingesetzt werden können, in der die Segmentspannzange sich durch das Federglied selber sichert. Die einzelnen Spannklauen der Segmentspannzange können sich aufgrund des Federgliedes selber untereinander ausrichten, was zwar auch mit einem seitlichen Spiel der Spannfüße verbunden ist. Dies ist aber hinsichtlich einer Unwucht unkritisch, da aufgrund der Flügel mit ihren großen Führungslängen eine in Umfangsrichtung gleichmäßige Verteilung der Spannklauen sichergestellt ist.

Aus fertigungstechnischen Gründen ist es bevorzugt, wenn das Federglied durch einen gummielastischen Ring gebildet ist, der in einer am Klauenfuß in Umfangsrichtung verlaufenden Nut gehalten ist, in Umfangsrichtung in die zwischen den Spannklauen bestehenden Lücken eingreift und mit den Radialflächen der Klauenfüße verbunden ist.

Weiterhin ist vorgesehen, daß an dem Klauenfuß ein zum Spannkopf weisender Wulst ausgebildet ist zur Zusammenwirkung mit einem an der Stellfläche des Spannkopfes ausgebildeten Ringbund mit in axialer Richtung konstantem Durchmesser. Dieser Ringbund wird genutzt, um die Spannklauen mit ihrem Klauenfuß in der Nut der Arbeitsspindel so zu verschwenken, daß der Klauenkopf außer Eingriff mit den Spannschrägen des Hohlschaftes ist, so daß der Hohlschaft entweder von der Arbeitsspindel entfernt oder in diese eingesetzt werden kann. Der Ringbund sichert die dazu erforderliche Lage der Spannklauen, wobei der in axialer Richtung gegebene konstante Durchmesser des Ringbundes diese Stellung der Spannklauen für den Bereich der axialen Länge des Ringbundes unabhängig von der axialen Stellung des Spannkopfes macht.

Beim Spannen des Hohlschaftes ist es sehr wichtig, daß die Spannklauen zur Anlage an die Spannschrägen des Hohlschaftes gebracht werden können, daß also die Spannschrägen und die Schrägflächen eine Überlappung in axialer Richtung aufweisen mit einem ausreichend großen Fanghub. Um dies zu gewährleisten, ohne die Spannklauen selber axial verlängern zu müssen, weist die in der Arbeitsspindel zur Aufnahme des Klauenfußes ausgebildete Ringnut eine zum Klauenkopf geneigte Nutwand auf, durch die der Klauenkopf mit den Schrägflächen bei der Verstellung radial nach auswärts axial weiter nach vorne Richtung Hohlschaft reicht. Um dennoch eine sichere Lagerung der Spannklauen in der Arbeitsspindel zu erzielen, erstreckt sich die Nutwand bis zu ihrer halben Höhe rechtwinklig vom Nutgrund und weist auf der alten Höhe einen Neigungswinkel von 10° auf.

Im folgenden wird die Erfindung an in der Zeichnung dargestellten Ausführungsbeispielen näher erläutert; es zeigen:
- Fig. 1: einen Längsschnitt durch das einen Hohlschaft haltende axiale Ende einer Spannvorrichtung; oben in der Spannstellung und unten in der Lösestellung gezeigt,

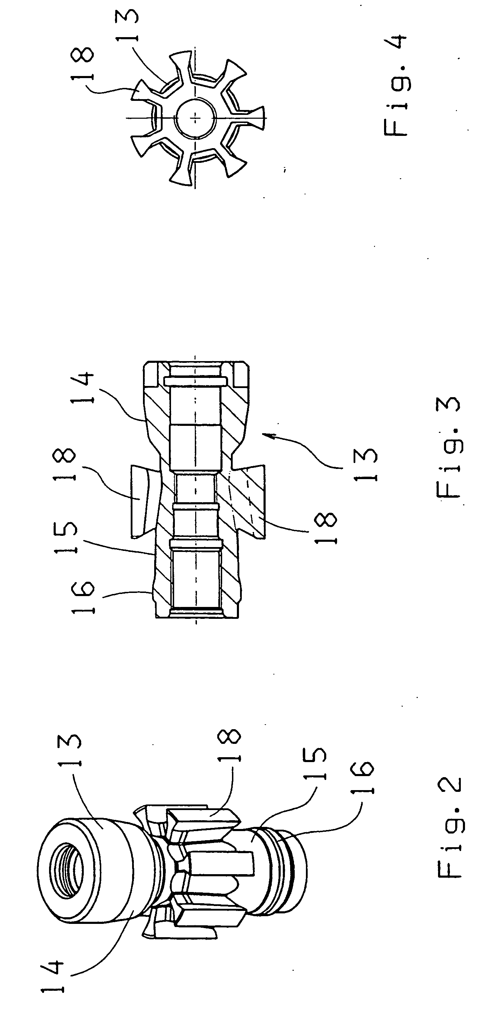

- Fig. 2: eine perspektivische Darstellung des die Flügel aufweisenden Spannkopfes,
- Fig. 3: einen Längsschnitt durch den Spannkopf aus Figur 2,
- Fig. 4: eine Draufsicht auf den Spannkopf aus Figur 2,
- Fig. 5: eine perspektivische Darstellung der zu einer Segmentspannzange zusammengefaßten Spannklauen,

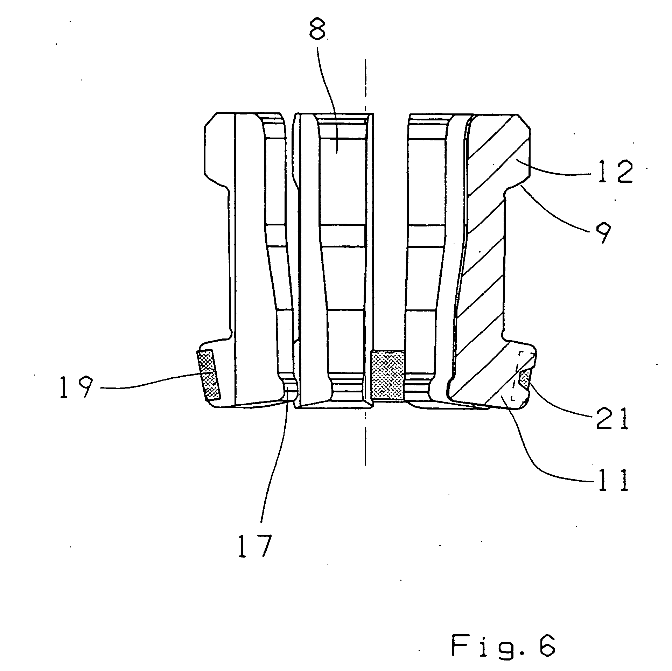

- Fig. 6: einen Längsschnitt durch die Segmentspannzange aus Figur 5,

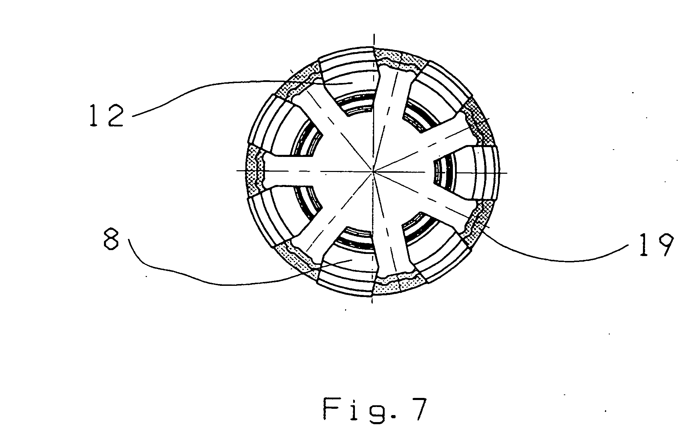

- Fig. 7: eine Draufsicht auf die Segmentspannzange aus Figur 5,
- Fig. 8: eine Vorderansicht auf das freie Ende einer Spannvorrichtung mit den Spannklauen, die in der oberen Hälfte infolge der axialen Stellung des Spannkopfes in Eingriff mit den Spannschrägen des Hohlschaftes und in der unteren Hälfte außer Eingriff sind bei einer Ausführungsform mit insgesamt sieben Spannklauen und entsprechend sieben am Spannkopf ausgebildeten Flügeln, und
- Fig. 9: eine der Figur 8 entsprechende Darstellung einer Ausführungsform mit sechs Spannklauen und entsprechend sechs Flügeln.

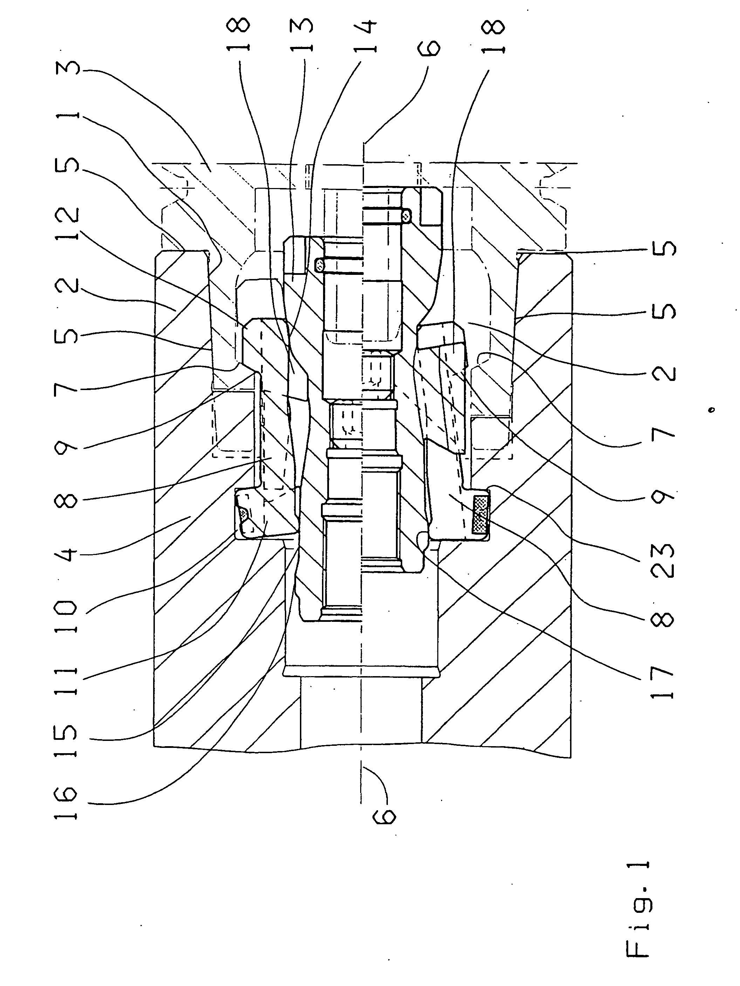

In Figur 1 ist eine Spannvorrichtung gezeigt zur lösbaren Kupplung eines einen Hohlschaft 1 mit einer Hohlschaftaufnahme 2 aufweisenden Werkstücks 3 mit der Arbeitsspindel 4 einer Werkzeugmaschine. Zwischen dem Hohlschaft 1 und der Arbeitsspindel 4 sind Planflächen 5 ausgebildet, und zwar radial gerichtete Planflächen 5 sowie aufgrund der Gestaltung des Hohlschaftes 1 als Hohlschaftkegel geneigt zur Längsachse 6 verlaufende Planflächen 5. Um den Hohlschaft 1 zum sicheren Spannen gegen diese Planflächen 5 pressen zu können, sind in der Hohlschaftaufnahme 2 geneigt verlaufende Spannschrägen 7 ausgebildet, an denen Spannklauen 8 mit korrespondierend geneigten Schrägflächen 9 zur Anlage gebracht werden können. Die Spannklauen 8 sind in einer in Umfangsrichtung der Arbeitsspindel 4 verlaufenden Ringnut 10 gelagert und erstrecken sich im wesentlichen in axialer Richtung parallel zur Längsachse 6 der Spannvorrichtung, wobei die Spannklauen 8 in die Ringnut 10 mit einem Klauenfuß 11 eingreifen und am entgegengesetzten freien Ende einen Klauenkopf 12 aufweisen, an dem die Schrägflächen 9 ausgebildet sind. Zur Verstellung der Spannklauen 8 und damit zur Betätigung der Spannvorrichtung ist in der Arbeitsspindel 4 ein axial verschieblicher Spannkopf 13 geführt, der zur Ausbildung eines Keilgetriebes mit dem Klauenkopf eine mit diesem zusammenwirkende Kegelfläche 14 aufweist sowie zum Lösen der Spannung eine an dem Klauenfuß 11 angeordnete Stellfläche 15, an der ein Ringbund 16 mit axial konstantem Durchmesser ausgebildet ist, der mit einem am Klauenfuß 11 ausgebildeten Wulst 17 zusammenwirkt.

Zwischen der Kegelfläche 14 und der Stellfläche 15 des Spannkopfes 13 sind zur Führung der Spannklauen 8 radial abstehende Flügel 18 ausgebildet, deren Längenerstreckung in axialer Richtung des Spannkopfes 13 sich radial von innen nach außen vergrößert.

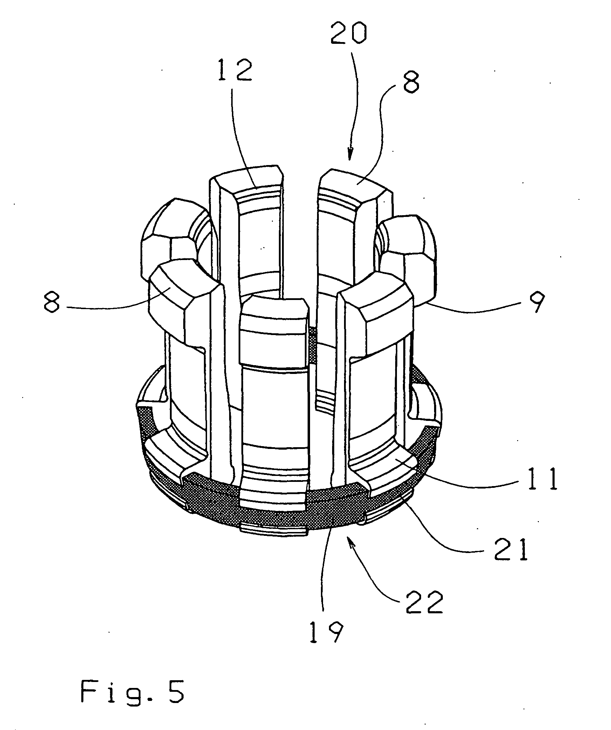

Wie insbesondere aus Figur 5 ersichtlich ist, sind die Spannklauen 8 an ihren Klauenfüßen 11 durch ein Federglied 19 zu einer Segmentspannzange 20 verbunden, wobei das Federglied 19 durch einen gummielastischen, an die Klauenfüße 11 vulkanisierten Ring gebildet ist, der in einer am Klauenfuß 11 in Umfangsrichtung verlaufenden Nut 21 gehalten ist und sich in Umfangsrichtung in die zwischen den Spannklauen 8 bestehenden Lücken 22 erstreckt und mit den Radialflächen der Klauenfüße 11 verbunden ist.

Die in der Arbeitsspindel 4 zur Aufnahme des Klauenfußes 11 ausgebildete Ringnut 10 weist eine Nutwand 23 auf, die sich bis zu ihrer halben Höhe vom Nutgrund rechtwinklig erstreckt und ab dieser Höhe mit einem Neigungswinkel von 10° zum Klauenkopf 12 neigt, damit dieser zum Einsetzen des Hohlschaftes 1 einen ausreichenden Fanghub aufweist.

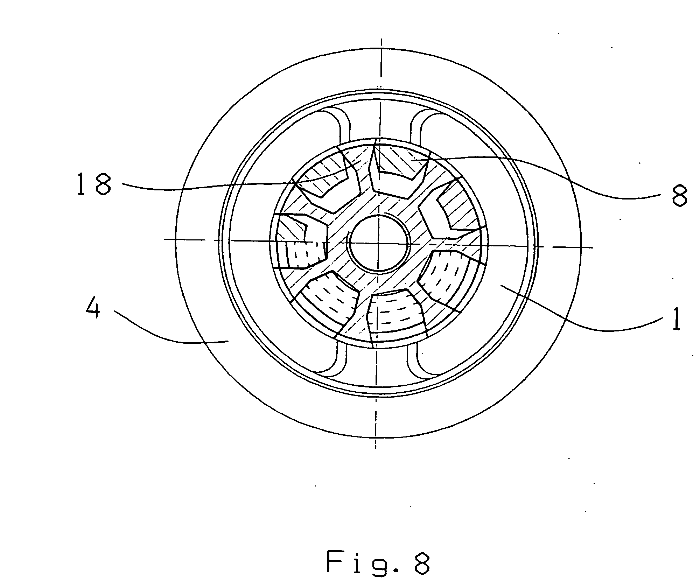

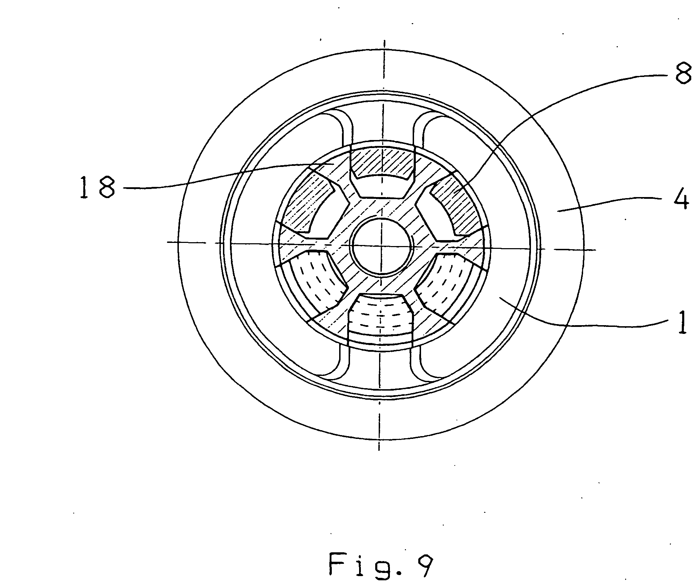

Die Spannvorrichtung kann prinzipiell mit einer beliebigen geradzahligen oder ungeradzahligen Anzahl von Spannklauen 8 realisiert werden. Als günstig haben sich Ausführungsformen mit sechs oder sieben Spannklauen 8 herausgestellt, die in den Figuren 8 und 9 gezeigt sind.

## Patentansprüche

1. Spannvorrichtung zur lösbaren Kupplung eines einen Hohlschaft (1) mit einer Hohlschaftaufnahme (2) aufweisenden Werkzeugs, Werkstücks (3) oder dergl. mit der Arbeitsspindel (4) einer Werkzeugmaschine, wobei der Hohlschaft (1) in der Hohlschaftaufnahme (2) geneigt verlaufende Spannschrägen (7) aufweist, an denen zur Erzeugung einer Anpreßkraft zwischen dem Hohlschaft (1) und der Arbeitsspindel (4) durch einen axial verschieblichen, in der Arbeitsspindel (4) geführten Spannkopf (13) betätigbare, an der Arbeitsspindel (4) gelagerte Spannklauen (8) mit korrespondierend geneigten Schrägflächen (9) zur Anlage bringbar sind, **dadurch gekennzeichnet, daß** an dem Spannkopf (13) zur Führung der Spannklauen (8) radial abstehende Flügel (18) ausgebildet sind.

2. Spannvorrichtung nach Anspruch 1, **dadurch gekennzeichnet, daß** jede Spannklaue (8) an dem Ende, das von dem die Schrägfläche (9) aufweisenden Klauenkopf (12) abgewandt ist, einen in eine in Umfangsrichtung der Arbeitsspindel (4) verlaufende Ringnut (10) eingreifenden Klauenfuß (11) aufweist, daß an dem Spannkopf (13) zur Ausbildung eines Keilgetriebes eine mit dem Klauenkopf (12) jeder Spannklaue (8) zusammenwirkende Kegelfläche (14) und zum Lösen der Spannung eine dem Klauenfuß (11) zugeordnete Stellfläche (15) ausgebildet ist, und daß die Flügel (18) zwischen der Kegelfläche (14) und der Stellfläche (15) angeordnet sind.

3. Spannvorrichtung nach Anspruch 1 oder 2, **dadurch gekennzeichnet, daß** sich die Längenerstreckung der Flügel (18) in axialer Richtung des Spannkopfes (13) radial von innen nach außen vergrößert.

4. Spannvorrichtung nach einem der Ansprüche 1 bis 3, **dadurch gekennzeichnet, daß** die Spannklauen (8) an ihren Klauenfüßen (11) durch ein Federglied (19) zu einer Segmentspannzange (20) verbunden sind.

5. Spannvorrichtung nach Anspruch 4, **dadurch gekennzeichnet, daß** das Federglied (19) durch einen gummielastischen Ring gebildet ist, der in einer am Klauenfuß (11) in Umfangsrichtung verlaufenden Nut (21) gehalten ist, in Umfangsrichtung in die zwischen den Spannklauen (8) bestehenden Lücken (22) eingreift und mit den Radialflächen der Klauenfüße (11) verbunden ist.

6. Spannvorrichtung nach einem der Ansprüche 2 bis 5, **dadurch gekennzeichnet, daß** an dem Klauenfuß (11) ein zum Spannkopf (13) weisender Wulst (17) ausgebildet ist zur Zusammenwirkung mit einem an der Stellfläche (15) des Spannkopfs (13) ausgebildeten Ringbund (16) mit in axialer Richtung konstantem Durchmesser.

7. Spannvorrichtung nach einem der Ansprüche 2 bis 6, **dadurch gekennzeichnet, daß** die in der Arbeitsspindel (4) zur Aufnahme des Klauenfußes (11) ausgebildete Ringnut (10) eine zum Klauenkopf (12) geneigte Nutwand (23) aufweist.

8. Spannvorrichtung nach Anspruch 7, **dadurch gekennzeichnet, daß** die Nutwand (23) bis zu ihrer halben Höhe sich rechtwinklig vom Nutgrund erstreckt und ab der halben Höhe einen Neigungswinkel von 10° aufweist.

## Claims

1. A clamping device for releasably coupling a tool, workpiece (3) or the like which has a hollow shank (1) with a hollow shank receiving means (2), to the working spindle (4) of a machine tool, wherein the hollow shank (1) has clamping bevel surfaces (7) extending inclinedly in the hollow shank receiving means (2) and against which clamping claws (8) which are mounted on the working spindle (4) and which are actuable by an axially displaceable clamping head (13) guided in the working spindle (4) can be brought to bear with correspondingly inclined bevel faces (9) to produce a pressing force between the hollow shank (1) and the working spindle (4), **characterised in that** radially projecting fins (18) are provided on the clamping head (13) for guiding the clamping claws (8).

2. A clamping device according to claim 1 **characterised in that** at the end which is remote from the claw head (12) having the bevel face (9) each clamping claw (8) has a claw foot (11) engaging into an annular groove (10) extending in the peripheral direction of the working spindle (4), that provided on the clamping head (13) to provide a wedge transmission arrangement is a taper surface (14) co-operating with the claw head (12) of each clamping claw (8) and to release the clamping action there is a control surface (15) associated with the claw foot (11), and that the fins (18) are disposed between the taper surface (14) and the control surface (15).

3. A clamping device according to claim 1 or claim 2 **characterised in that** the longitudinal extent of the fins (18) increases radially outwardly in the axial direction of the clamping head (13).

4. A clamping device according to one of claims 1 to 3 **characterised in that** the clamping claws (8) are connected at their claw feet (11) by a spring member (19) to form a segment clamping collet (20).

5. A clamping device according to claim 4 **characterised in that** the spring member (19) is formed by a rubber-elastic ring which is held in a groove (21) extending in the peripheral direction on the claw foot (11), which engages in the peripheral direction into the gaps (22) between the clamping claws (8) and which is connected to the radial faces of the claw feet (11).

6. A clamping device according to one of claims 2 to 5 **characterised in that** provided on the claw foot (11) is a ridge (17) facing towards the clamping head (13), for co-operating with an annular collar (15) at the control surface (15) of the clamping head (13) and of a constant diameter in the axial direction.

7. A clamping device according to one of claims 2 to 6 **characterised in that** the annular groove (10) in the working spindle (4) for receiving the claw foot (11) has a groove wall (23) which is inclined relative to the claw head (12).

8. A clamping device according to claim 7 **characterised in that** the groove wall (23) extends from the bottom of the groove at a right angle as far as half its height and from half its height is at an angle of inclination of 10°.

## Revendications

1. Dispositif de serrage pour réaliser l'accouplement séparable d'un outil, d'une pièce (3) ou similaire, comportant un arbre creux (1) présentant un logement d'arbre creux (2), avec l'arbre moteur (4) d'une machine-outil, dans lequel le logement d'arbre creux présente des portées de serrage (7) obliques sur lesquelles, pour produire une force de pression entre l'arbre creux (1) et l'arbre moteur (4), peuvent être amenées en contact, en étant actionnées par une tête de serrage (13) pouvant coulisser axialement dans l'arbre moteur (4), des portées obliques (9) d'inclinaison correspondante réalisées sur des mâchoires de serrage (8) montées dans l'arbre moteur (4), **caractérisé en ce que** pour guider les mâchoires de serrage (8), des ailes (18) en saillie radiale sont réalisées sur la tête de serrage.

2. Dispositif de serrage selon la revendication 1, **caractérisé en ce que**
- chaque mâchoire de serrage (8) présente à son extrémité éloignée de la tête de mâchoire (12) présentant la portée oblique (9), un pied de mâchoire (11) engagé dans une rainure annulaire creusée périphériquement dans l'arbre moteur (4),
- sur la tête de serrage (13) sont réalisées, d'une part pour établir un engrenage en coin, une portée conique (14) coopérant avec la tête (12) de chaque mâchoire de serrage (8), d'autre part pour assurer le desserrage, une portée de réglage (15) associée au pied de mâchoire (11),
- les ailes (18) sont disposées entre la portée conique (14) et la portée de réglage (15).

3. Dispositif de serrage selon la revendication 1 ou 2, **caractérisé en ce que** sur son étendue longitudinale parallèle à l'axe de la tête de serrage (13), chaque aile (18) présente une largeur qui augmente en allant radialement de l'intérieur vers l'extérieur.

4. Dispositif de serrage selon une des revendications 1 à 3, **caractérisé en ce que** les mâchoires de serrage (8) sont reliées au niveau de leurs pieds de mâchoire (11) par un organe élastique pour donner une pince de serrage segmentée (20).

5. Dispositif de serrage selon la revendication 4, **caractérisé en ce que** l'organe élastique (19) est constitué par une bague élastique comme du caoutchouc, maintenue dans une rainure (21) creusée périphériquement dans chaque pied de mâchoire (11), cette bague étant engagée périphériquement dans les intervalles (22) entre les mâchoires de serrage (8) et reliée aux faces radiales des pieds de mâchoire (11).

6. Dispositif de serrage selon une des revendications 2 à 5, **caractérisé en ce que** chaque pied de mâchoire (11) porte un bourrelet (17) en direction de la tête de serrage (13), pour coopérer avec un collet annulaire (16) réalisé sur la portée de réglage (15) de la tête de serrage (13) et présentant un diamètre constant en direction axiale.

7. Dispositif de serrage selon une des revendications 2 à 6, **caractérisé en ce que** la rainure annulaire (10) réalisée dans l'arbre moteur (4) pour accueillir les pieds de mâchoire (11) présente une paroi (23) inclinée en direction de la tête de mâchoire (12).

8. Dispositif de serrage selon la revendication 7, **caractérisé en ce que** la paroi de rainure (23) part du fond de rainure en étant perpendiculaire à celui-ci, puis à partir de sa mi-hauteur, s'incline d'un angle de 10°.
